# EUROPEAN PATENT APPLICATION

(11) **EP 4 597 355 A1**
(43) Date of publication of application: **06.08.2025**
(21) Application number: 23895084.4
(22) Date of filing: 24.11.2023
(51) Int. Cl.: G06F 40/166, G06F 40/194, G06F 40/197, G06F 40/106, G06Q 10/10, G06F 9/30, G06F 9/38

(54) **ELECTRONIC DEVICE AND METHOD FOR PROCESSING COLLABORATIVE EDITING INSTRUCTIONS**

(30) Priority: 24.11.2022 KR 20220159711; 14.12.2022 KR 20220174839
(71) Applicant: Samsung Electronics Co., Ltd., Suwon-si, Gyeonggi-do 16677 (KR)
(72) Inventor: PARK, Gun, Suwon-si, Gyeonggi-do 16677 (KR); KIM, Segon, Suwon-si, Gyeonggi-do 16677 (KR)
(74) Representative: Gulde & Partner
(86) International application number: PCT/KR2023/019114
(87) International publication number: WO 2024/112157

(57) **Abstract**

An electronic device of the present disclosure comprises a memory, a communication circuit, and at least one processor in conjunction with the memory and the communication circuit, wherein the processor may be configured: to receive, via the communication circuit, instructions for creating a document generated on the basis of instructions having a hierarchical structure from an external electronic device; to identify synthesis information for the instructions; to determine whether to combine the instructions into previous instructions on the basis of the synthesis information; and to combine the instructions into the previous instructions on the basis of the determination.

## Description

### Technical Field

Embodiments of the disclosure relate to processing collaborative editing instructions, for example, to an electronic device and method for processing collaborative editing instructions.

### Background Art

With the development of digital technology, electronic devices are evolving to be capable of providing various functions. For example, an electronic device may transmit a variety of data to a server using a communication function such as the wired/wireless Internet and may share the same with other electronic devices.

With the recent provision of collaborative editing services, if the electronic device transmits instructions for collaborative editing to the server, the server may process the received instructions and transmit the same to other electronic devices, allowing a plurality of electronic devices to collaboratively edit a document in real time.

The above-described information may be provided as the related art to help understanding of the disclosure. No claim or decision is made as to whether any of the above contents may be applied as the prior art related to the disclosure.

### Disclosure of Invention

### Technical Problem

An electronic device according to various embodiments of the disclosure may include a memory, a communication circuit, and at least one processor in conjunction with the memory and the communication circuit, and the processor may be configured to receive an instruction for document creation generated based on an instruction having a hierarchical structure from an external electronic device through the communication circuit, to identify synthesis information on the instruction, and to determine whether to synthesize the instruction with a previous instruction based on the synthesis information, and to synthesize the instruction with the previous instruction based on synthesis determination.

An electronic device according to various embodiments of the disclosure may include a display, a communication circuit, and at least one processor operatively connected to the display and the communication circuit, and the processor may be configured to display, on the display, a document created based on an instruction having a hierarchical structure, to identify whether an instruction to be received is present based on communication with an external electronic device through the communication circuit, to preferentially receive a synthetic instruction among the instructions to be received, and to change the document displayed on the display based on the received instructions.

A method of an electronic device according to various embodiments of the disclosure may include receiving an instruction for document creation generated based on an instruction having a hierarchical structure from an external electronic device through the communication circuit, identifying synthesis information on the instruction, and determining whether to synthesize the instruction with a previous instruction based on the synthesis information, and synthesizing the instruction with the previous instruction based on synthesis determination.

A method of an electronic device according to various embodiments of the disclosure may include displaying, on the display, a document created based on an instruction having a hierarchical structure, identifying whether an instruction to be received is present based on communication with an external electronic device, preferentially receiving a synthetic instruction among the instructions to be received, and changing the document displayed on the display based on the received instructions.

The technical subjects, features, and effects to be achieved by the disclosure are not limited to the above-described technical subjects, features, and effects, and still other technical subjects, features, and effects not mentioned herein will be clearly understood by one of ordinary skill in the art to which the disclosure pertains from the following description.

### Brief Description of Drawings

In relation to description of drawings, the same or like reference numerals may be used for the same or like components.
FIG. 1 is a block diagram of an electronic device in a network environment according to various embodiments.
FIG. 2 is a diagram for explaining an example of providing a collaborative editing service to a plurality of electronic devices according to various embodiments.
FIG. 3 is an example of a block diagram of an electronic device according to various embodiments.
FIG. 4 is an example of a block diagram of a server according to various embodiments.
FIG. 5 is a view for explaining an example of a collaborative editing instruction processing operation according to various embodiments.
FIG. 6 is a view for explaining an example of a collaborative editing instruction processing operation according to various embodiments.
FIG. 7 is a diagram for explaining components for collaborative editing service provision of a server according to various embodiments.
FIG. 8 is a view for explaining an example of a collaborative editing instruction synthesizing operation according to various embodiments.
FIG. 9 is a view for explaining an example of a collaborative editing instruction synthesizing operation according to various embodiments.
FIG. 10 is a view for explaining an example of a collaborative editing instruction synthesizing operation according to various embodiments.
FIG. 11 is a view for explaining an example of a collaborative editing instruction synthesizing operation according to various embodiments.
FIG. 12 is a diagram for explaining components for collaborative editing service provision of a plurality of electronic devices according to various embodiments.
FIG. 13 is a signal flowchart for explaining an example of a collaborative editing instruction processing operation of a server according to various embodiments.
FIG. 14 is a signal flowchart for explaining an example of a collaborative editing instruction processing operation of an electronic device according to various embodiments.
FIG. 15 is a signal flowchart for explaining an example of a collaborative editing instruction processing operation of a server according to various embodiments.
FIG. 16 is a signal flowchart for explaining an example of a collaborative editing instruction processing operation of an electronic device according to various embodiments.

### Mode for the Invention

Hereinafter, embodiments of the disclosure will be described in detail with reference to the accompanying drawings to be easily carried out by one of ordinary skill in the art. However, the disclosure may be implemented in various different forms and is not limited to the embodiment described herein. Regarding describing drawings, the same or like reference numerals may be used for the same or like components. Also, in drawings and relevant description, description related to a known function and configuration may be omitted for clarity and brevity.

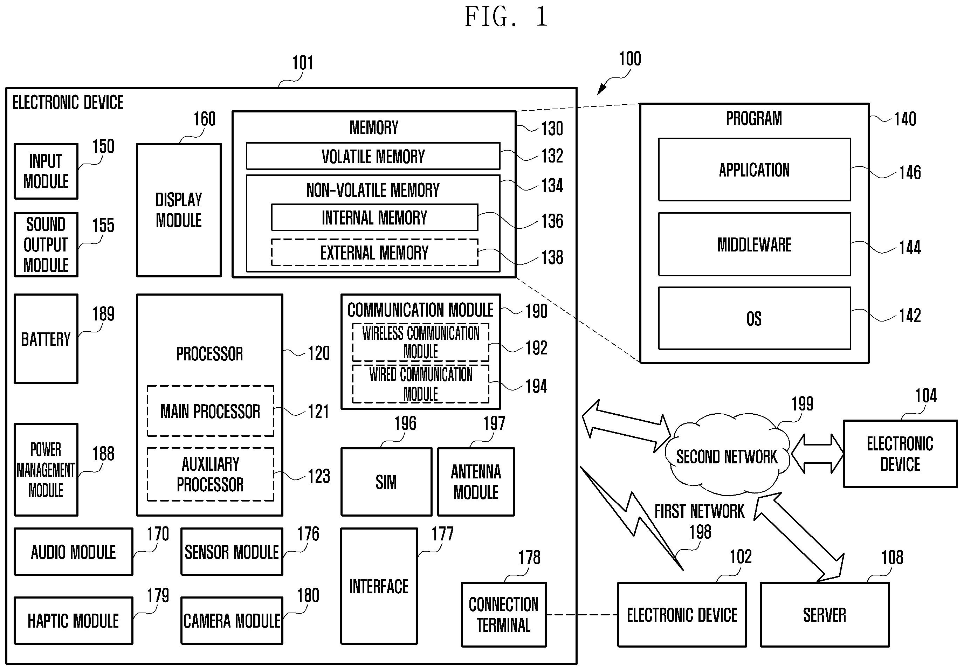

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input 1module 150, a sound output 1module 155, a display 1module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the 11connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160). 11

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display 1module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input 1module 150 may include, for example, a microphone, a mouse, a keyboard, a key (e.g., a button), or a digital pen (e.g., a stylus pen).

The sound output module 155 may output sound signals to the outside of the electronic device 101. The sound output 1module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 1module 160 may include, for example, a display, a hologram device, or a projector and control circuitry to control a corresponding one of the display, hologram device, and projector. According to an embodiment, the display 1module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input 1module 150, or output the sound via the sound output 1module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) there between via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

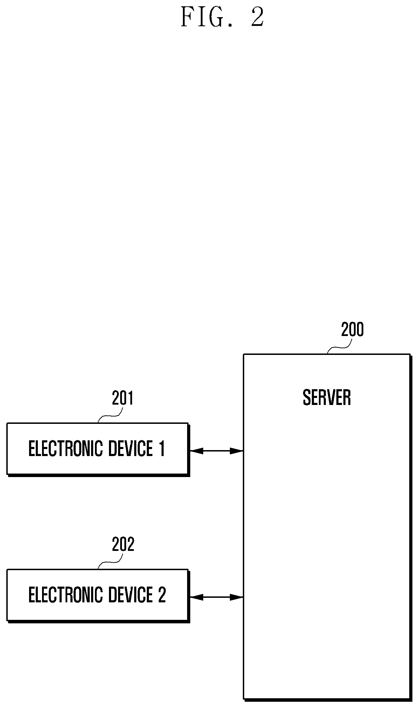

FIG. 2 is a diagram for explaining an example of providing a collaborative editing service to a plurality of electronic devices according to various embodiments.

According to various embodiments, the plurality of electronic devices may include two or more electronic devices (e.g., electronic device 101 of FIG. 1). Hereinafter, the plurality of electronic devices may be described as including, for example, a first electronic device 201 and a second electronic device 202, but the number of the plurality of electronic devices is not limited thereto and the collaborative editing service may be provided to three or more electronic devices.

According to various embodiments, the plurality of electronic devices including the first electronic device 201 and the second electronic device 202 may include, for example, a portable communication device (e.g., smartphone), a computer device, a portable multimedia device, a wearable device, or a home appliance. The electronic device according to an embodiment of the present document is not limited to the above-described devices.

According to various embodiments, the plurality of electronic devices including the first electronic device 201 and the second electronic device 202 may establish a wired or wireless communication channel with an external electronic device 200 (e.g., server 108 of FIG. 1), and may perform communication through the established communication channel.

According to various embodiments, the external electronic device 200 may include an electronic device that includes various resources for providing a collaborative editing service by performing communication with the plurality of electronic devices through the wired or wireless communication channel. Hereinafter, the external electronic device 200 may be referred to as the server 200.

According to various embodiments, the server 200 may provide the collaborative editing service in real time through real-time communication with the plurality of electronic devices.

According to various embodiments, the server 200 may receive and store instructions for editing a structural document, for example, a document that includes hierarchically structured elements, such as eXtensible markup language (XML), from one or more electronic devices among the plurality of electronic devices, and may transmit the same to one or more electronic devices among the plurality of electronic devices.

According to various embodiments, the server 200 may generate a synthesis instruction using a document editing instruction received from one or more electronic devices among the plurality of electronic devices as is, or by synthesizing two or more instructions among instructions, and may store and/or transmit the same to one or more electronic devices among the plurality of electronic devices.

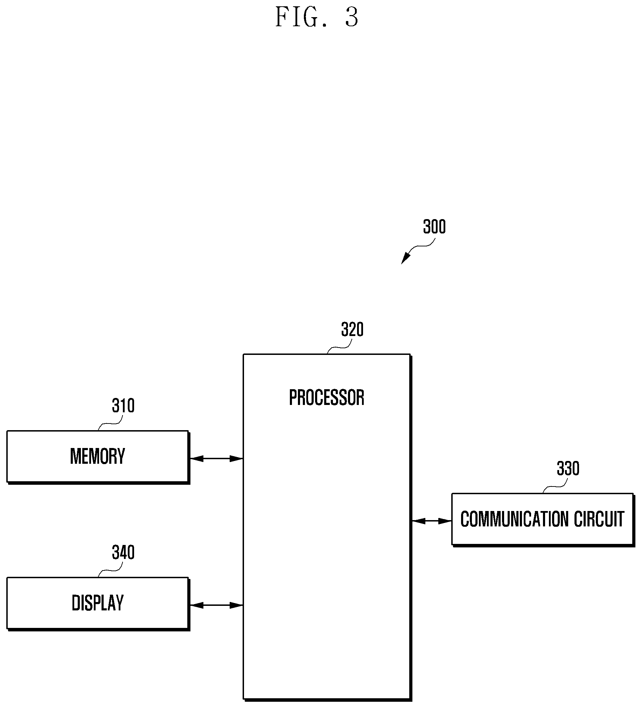

FIG. 3 is an example of a block diagram of an electronic device according to various embodiments.

According to various embodiments, an electronic device 300 (e.g., electronic device 101 of FIG. 1, first electronic device 201 or second electronic device 202 of FIG. 2) may include a memory 310 (e.g., memory 130 of FIG. 1), a processor 320 (e.g., processor 120 of FIG. 1), a communication circuit 330 (e.g., communication module 190 of FIG. 1), and a display 340 (e.g., display module 160 of FIG. 1).

According to various embodiments, to perform a collaborative document task, the processor 320 may load, from the memory 310 (e.g., memory 130 of FIG. 1), software (e.g., program 140 of FIG. 1) that includes a protocol for establishing and connecting a wired or wireless communication channel with a server (e.g., server 200 of FIG. 2), and may perform various data processing or operations by controlling at least one another component (e.g., hardware or software component) of the electronic device 300 that includes the communication circuit 330 connected to the processor 320.

According to various embodiments, the processor 320 may execute an application (e.g., application 146 of FIG. 1) for performing a collaborative document creation task to display a screen of a specific document on the display 340, to generate and transmit an editing instruction for the specific document to the server 200 or to receive the editing instruction for the specific document from the server 200, and based on this, to reflect (e.g., screen update) the same on the screen of the specific document displayed on the display 340.

According to various embodiments, an editing instruction may include an instruction for generating, adding, changing, and/or deleting various elements including various objects, such as text, shape, color, and image, and locations thereof and information in which the elements are structured in a hierarchical structure.

According to various embodiments, the processor 320 may identify whether an editing instruction to be received is present in the server 200 through communication with the server 200, and may receive the identified editing instruction.

According to various embodiments, the processor 320 may identify basic information, for example, a checkpoint value of the server 200, and based on this, may identify whether an editing instruction to be received is present in the server 200. For example, the processor 320 may compare a checkpoint value of the server 200 and a checkpoint value of the electronic device 300 and may identify whether the editing instruction to be received is present in the server 200. For example, the checkpoint value of the server 200 refers to sequence for editing instructions for the specific document and, for example, may include a number that is added according to a reception point in time by the server 200. For example, the checkpoint value of the server 200 and the checkpoint value of the electronic device 300 may differ from each other before editing instructions stored in the server 200 and the electronic device 300 are synchronized.

According to various embodiments, the processor 320 may identify whether a synthetic instruction is present among editing instructions to be received and may preferentially receive the identified synthetic instruction. The synthetic instruction may include an instruction generated by synthesizing two or more editing instructions.

According to various embodiments, the processor 320 may identify a synthesis checkpoint value of the server 200 and, based on this, may identify whether a synthetic instruction to be received is present in the server 200. Hereinafter, a checkpoint value for editing instructions corresponding to synthesis checkpoint may be referred to as basic checkpoint. For example, the processor 320 may compare a synthesis checkpoint value of the server 200 and a synthesis checkpoint value of the electronic device 300, and may identify whether the synthetic instruction to be received is present in the server 200. For example, the synthesis checkpoint value of the server 200 may include a combination of numbers that are sequentially added to synthetic instructions for a specific document, for example, according to a synthesis point in time by the server 200. For example, the synthesis checkpoint value of the server 200 and the synthesis checkpoint value of the electronic device 300 may differ from each other before synthetic instructions stored in the server 200 and the electronic device 300 are synchronized.

According to various embodiments, the processor 320 may receive a synthetic instruction from the server 200 and then, may identify whether an editing instruction to be received is present and may receive the identified editing instruction to be received.

According to various embodiments, the processor 320 may identify whether an editing instruction to be received after a synthetic instruction is present based on a basic checkpoint value and/or a synthesis checkpoint value.

According to various embodiments, the processor 320 may reflect on a screen of a specific document displayed on the display 340 based on a received instruction.

According to various embodiments, the processor 320 may update previously stored basic checkpoint and synthesis checkpoint based on basic checkpoint and synthesis checkpoint for received instructions.

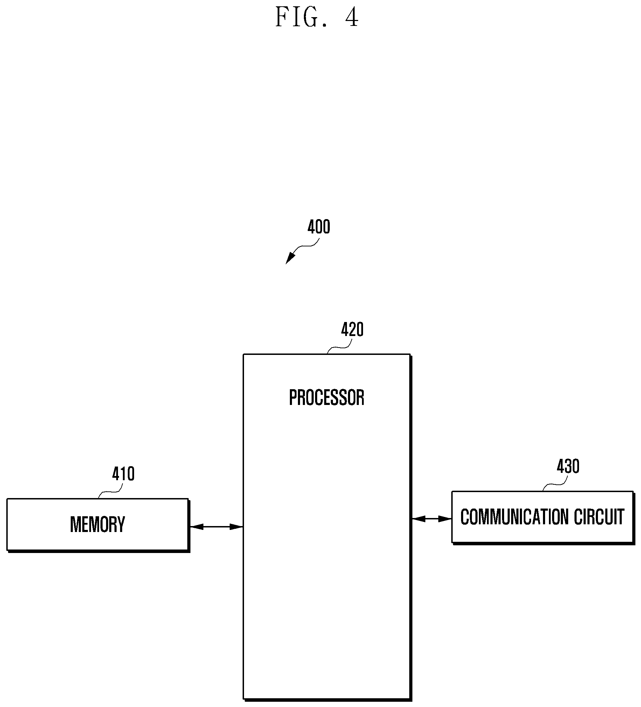

FIG. 4 is an example of a block diagram of a server according to various embodiments.

According to various embodiments, a server 400 (e.g., electronic device 101, server 108 of FIG. 1, or server 200 of FIG. 2) may include a memory 410 (e.g., memory 130 of FIG. 1), a processor 420 (e.g., processor 120 of FIG. 1), and a communication circuit 430 (e.g., communication module 190 of FIG. 1).

According to various embodiments, the server 400 may provide a collaborative document editing service to a plurality of electronic devices (e.g., first electronic device 201, second electronic device 202 of FIG. 2, or electronic device 300 of FIG. 3) according to an operation of the processor 420.

According to various embodiments, the processor 420 may load, from the memory 410 (e.g., memory 130 of FIG. 1), software (e.g., program 140 of FIG. 1) that includes a protocol for establishing a wired or wireless communication channel with a plurality of electronic devices, and may perform communication with the plurality of electronic devices and may transmit or receive various data and may process or operate the same, or may perform processing or operation for transmission or reception by controlling at least one another component (e.g., hardware or software component) that includes the communication circuit 430 connected to the processor 420.

According to various embodiments, the processor 420 may receive an editing instruction for a specific document from a single electronic device through a communication channel with the single electronic device among the plurality of electronic devices for performing a collaborative document creation task. The processor 420 may sequentially store the received editing instructions based on checkpoint.

According to various embodiments, the processor 420 may generate a synthetic instruction by storing editing instructions received from the plurality of electronic devices in the memory 410 and/or synthesizing two or more instructions among the received editing instructions, and may store the same in the memory 410.

According to various embodiments, the processor 420 may generate a synthetic instruction by synthesizing two or more instructions among editing instructions based on synthesis information. The synthesis information may include structural information and a synthesis condition. For example, the synthesis information may include the synthesis condition for synthesizing two or more editing instructions based on structural information of the editing instructions. For example, the synthesis information may include basic synthesis information configured in the server 400. For example, the synthesis information may include synthesis information configured by each electronic device. For example, the synthesis information may include the synthesis condition in which elements of two or more higher layers are identical, based on hierarchical structure information of elements included in the editing instruction.

According to various embodiments, the processor 420 may synthesize two or more instructions of which synthesis information matches among sequentially stored editing instructions. For example, the processor 420 may synthesize a current editing instruction with a previous editing instruction based on that synthesis information identified for the current editing instruction matches synthesis information of the previous editing instruction.

According to various embodiments, based on identifying that an instruction to be transmitted to a specific electronic device is present among stored editing instructions and/or synthetic instructions, the processor 420 may transmit the identified instruction to the electronic device. For example, the processor 420 may identify whether an editing instruction and/or synthetic instruction to be transmitted is present based on identifying of basic checkpoint and/or synthesis checkpoint through communication with a single electronic device among the plurality of electronic devices, and may transmit the identified instruction to the electronic device. For example, an instruction to be transmitted to a first electronic device (e.g., first electronic device 201 of FIG. 2) and an instruction to be transmitted to a second electronic device (e.g., second electronic device 202 of FIG. 2) among the plurality of electronic devices may differ from each other. For example, a basic checkpoint value for the first electronic device 201 and a basic checkpoint value for the second electronic device 202 among the plurality of electronic devices may differ from each other. For example, a synthesis checkpoint value for the first electronic device 201 and a synthesis checkpoint value for the second electronic device 202 among the plurality of electronic devices may differ from each other.

According to various embodiments, the processor 420 may compare a basic checkpoint value of the server 400 and a basic checkpoint value of an electronic device and, based on this, may identify presence of an instruction to be transmitted to the electronic device. For example, the basic checkpoint value of the server 400 refers to sequence for editing instructions for the specific document and, for example, may include a number that is added according to a reception point in time by the server 400. For example, the basic checkpoint value of the server 400 and the basic checkpoint value of the electronic device may differ from each other before document editing instructions stored in the server 200 and the electronic device are synchronized.

According to various embodiments, the processor 420 may compare a synthesis checkpoint value of the server 400 and a synthesis checkpoint value of the electronic device and, based on this, may identify presence of a synthetic instruction to be transmitted to the electronic device.

According to various embodiments, the processor 420 may identify whether a synthetic instruction among editing instructions to be transmitted is present in the server 400 based on the synthesis checkpoint value of the electronic device, and may preferentially transmit the identified synthetic instruction. For example, the processor 420 may compare a synthesis checkpoint value of the server 400 and a synthesis checkpoint value of the electronic device and may identify whether a synthetic instruction to be transmitted is present in the memory 410. For example, the synthesis checkpoint value of the server 400 refers to sequence for synthetic instructions for the specific document and, for example, may include a number that is added according to a synthesis point in time by the server 200. For example, the synthesis checkpoint value of the server 200 and the synthesis checkpoint value of the electronic device may differ from each other before synthetic instructions stored in the server 400 and the electronic device are synchronized.

According to various embodiments, the processor 420 may store a basic checkpoint value and a synthesis checkpoint value of each electronic device in the memory 410, and may update and manage these values based on transmission of instructions for each electronic device.

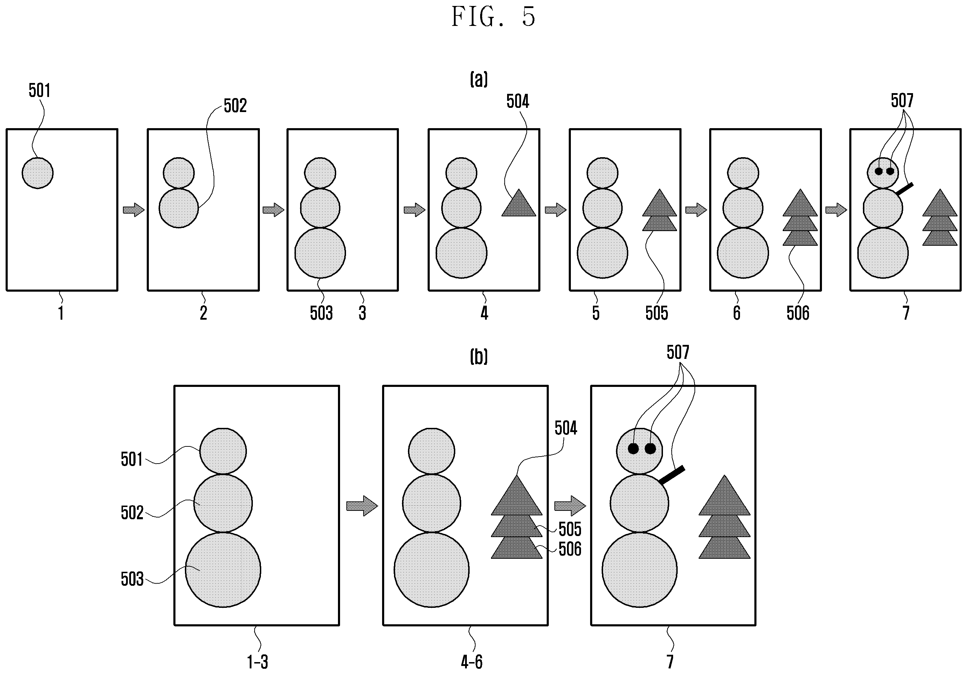

FIG. 5 is a view for explaining an example of a collaborative editing instruction processing operation according to various embodiments.

According to various embodiments, a server (e.g., server 200 of FIG. 2 or server 400 of FIG. 4) may provide a collaborative document editing service to a plurality of electronic devices (e.g., first electronic device 201, second electronic device 202 of FIG. 2, or electronic device 300 of FIG. 3).

According to various embodiments, the server may communicate with a plurality of electronic devices that desire to co-edit a specific document and may receive editing instructions for the specific document from the plurality of electronic devices.

According to various embodiments, editing instructions may include various instructions for generating, adding, changing, and/or deleting various elements including various objects, such as text, shape, color, and image included in the specific document, and information in which the elements are structured in a hierarchical structure.

According to an embodiment, editing instructions received by the server may include, for example, editing instructions sequentially received from 1 to 7 as shown in (a) of FIG. 5.

According to an embodiment, a first editing instruction may include an editing instruction for generating or adding a first object 501 at a specific location of the specific document, and a basic checkpoint value of the first editing instruction may be set to, for example, 1 at the server. For example, a second editing instruction may include an editing instruction for generating or adding a second object 502 at a location below the first object 501, and a basic checkpoint value of the second editing instruction may be set to, for example, 2 at the server. For example, a third editing instruction may include an editing instruction for generating or adding a third object 503 at a location below the second object 502, and a basic checkpoint value of the third editing instruction may be set to, for example, 3 at the server. For example, the first object 501, the second object 502, and the third object 503 may be objects of the same shape (e.g., circle).

In the drawing, a fourth editing instruction may include an editing instruction for generating or adding a fourth object 504 that is separated from the first object 501, the second object 502, and the third object 503, and present to the right of the second object 502, and a basic checkpoint value of the fourth editing instruction may be set to, for example, 4 at the server. For example, a fifth editing instruction may include an editing instruction for generating or adding a fifth object 505 at a location below of the fourth object 504 of the specific document, and a basic checkpoint value of the fifth editing instruction may be set to, for example, 5 at the server. For example, a sixth editing instruction may include an editing instruction for generating or adding a sixth object 506 at a location below the fifth object 505 of the specific document, and a basic checkpoint value of the sixth editing instruction may be set to, for example, 6 at the server.

In the drawing, a seventh editing instruction may include an editing instruction for generating and/or adding seventh objects 507 (e.g., two dots and line) inside the first object 501 and at the outskirt of the second object 502, respectively, and a basic checkpoint value of the seventh editing instruction may be set to, for example, 7 at the server.

According to various embodiments, the server may generate a synthetic instruction by synthesizing two or more instructions among editing instructions received from the plurality of electronic devices. For example, synthesis information may include a synthesis condition for synthesizing two or more editing instructions based on structural information of editing instructions. For example, the synthesis information may include basic synthesis information configured in the server 400. For example, the synthesis information may include synthesis information configured by each electronic device. For example, the synthesis information may include the synthesis condition in which elements of two or more higher layers are identical, based on hierarchical structure information of elements included in the editing instruction.

According to an embodiment, as shown in (b) of FIG. 5, the server may generate a synthetic instruction by synthesizing two or more editing instructions among editing instructions based on synthesis information.

According to an embodiment, for example, the server may configure, as basic synthesis information, synthesis information including a synthesis condition in which elements of three higher layers are identical based on structural information.

According to an embodiment, the server may synthesize two or more sequentially received editing instructions among the plurality of editing instructions based on basic synthesis information. For example, editing instructions in which elements of top three layers are grouped and synthesized based on structural information included in the editing instructions. For example, in an example in which elements of top three layers are in order of a specific document editing application, a specific page, and a specific object, instructions of FIG. (a) may include the same page element generated by the same specific document editing application. Therefore, according to synthesis information in which top 3 layer (3 depth) elements are identical, editing instructions representing the same object may be grouped and synthesized.

With reference to (b) of FIG. 5, among following editing instructions, editing instructions 1, 2, and 3 representing the objects of the same shape (e.g., circle), respectively, may be synthesized, and the editing instructions for generating and adding the first object 501, the second object 502, and third object the 503, respectively, may be synthesized and accordingly, a first synthetic instruction may be generated. For example, a synthesis checkpoint value (e.g., 1-3) of the first synthetic instruction may represent the editing instructions 1, 2, and 3 synthesized in the first synthetic instruction.

With reference to (b) of FIG. 5, among following editing instructions, editing instructions 4, 5, and 6 representing the objects of the same shape (e.g., triangle), respectively, may be synthesized, and the editing instructions for generating and adding the fourth object 504, the fifth object 505, and the sixth object 506, respectively, may be synthesized and accordingly, a second synthetic instruction may be generated. For example, a synthesis checkpoint value (e.g., 4-6) of the second synthetic instruction may represent the editing instructions 4, 5, and 6 synthesized in the second synthetic instruction.

With reference to (b) of FIG. 5, the seventh editing instruction may not be synthesized since there is no other subsequent editing instruction representing an object of the same shape.

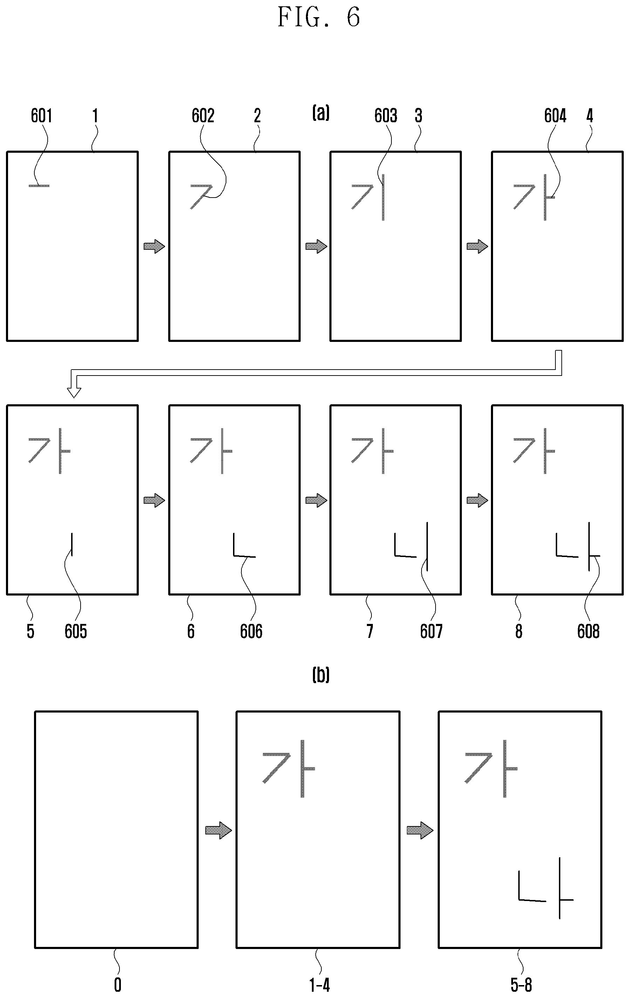

FIG. 6 is a view for explaining an example of a collaborative editing instruction processing operation according to various embodiments.

According to various embodiments, a server (e.g., server 200 of FIG. 2 or server 400 of FIG. 4) may provide a collaborative document editing service to a plurality of electronic devices (e.g., first electronic device 201, second electronic device 202 of FIG. 2, or electronic device 300 of FIG. 3).

According to various embodiments, the server may communicate with the plurality of electronic devices that desire to co-edit a specific document and may receive editing instructions for a specific document from the plurality of electronic devices.

According to various embodiments, editing instructions may include instructions for generating, adding, changing, and/or deleting data for various elements including various objects, such as text, shape, color, and image included in the specific document, and information in which the elements are structured in a hierarchical structure.

According to an embodiment, editing instructions received by the server may include, for example, editing instructions sequentially received from 1 to 8 as shown in (a) of FIG. 6.

According to an embodiment, a first editing instruction may include an editing instruction for generating or adding a first object (e.g., line) 601 at a specific location of the specific document. In the following, a second editing instruction, a third editing instruction, and a fourth editing instruction may include editing instructions for generating or adding a second object 602, a third object 603, and a fourth object 605 following the first object 601 of the specific document, respectively. For example, at the server, basic checkpoint values for the first editing instruction, the second editing instruction, the third editing instruction, and the fourth editing instruction may be sequentially set to, for example, 1, 2, 3, and 4, respectively. Meanwhile, the first object 601, the second object 602, the third object 603, and the fourth object 604 sequentially generated by the first editing instruction, the second editing instruction, the third editing instruction, and the fourth editing instruction, respectively, may include the same color.

In the drawing, a fifth editing instruction may include an editing instruction for generating or adding a fifth object 605 at a location separated from the first object 601, the second object 602, the third object 603, and the fourth object 604 by certain distance or more. Hereinafter, a sixth editing instruction, a seventh editing instruction, and an eighth editing instruction may include editing instructions for generating or adding a sixth object 606, a seventh object 607, and an eighth object 608, respectively, following the fifth object 605 of the specific document, respectively. For example, at the server, basic checkpoint values for the fifth editing instruction, the sixth editing instruction, the seventh editing instruction, and the eighth editing instruction may be sequentially set to, for example, 5, 6, 7, and 8. Meanwhile, the fifth object 605, the sixth object 606, the seventh object 607, and the eighth object 608 generated by the fifth editing instruction, the sixth editing instruction, the seventh editing instruction, and the eighth editing instruction, respectively, may include the same color. The color of the first object 601, the second object 602, the third object 603, and the fourth object 604 may differ from the color of the fifth object 605, the sixth object 606, the seventh object 607, and the eighth object 608.

According to various embodiments, the server may generate a synthetic instruction by synthesizing two or more instructions among editing instructions received from the plurality of electronic devices. For example, synthesis information may include the synthesis condition for synthesizing two or more editing instructions based on structural information of editing instructions. For example, the synthesis information may include basic synthesis information configured to the server 400. For example, the synthesis information may include synthesis information configured by each electronic device. For example, the synthesis information may include a condition that elements of two or more higher layers are identical, based on hierarchical structure information of elements included in the editing instructions.

According to an embodiment, for example, as shown in (b) of FIG. 6, the server may generate a synthetic instruction by synthesizing two or more editing instructions among editing instructions based on the synthesis information.

In the example of FIG. 6, synthesis information may include the same synthesis condition up to 4 level layer in structural information. For example, when 1 level is a document, 2 level is a page, 3 level is an object, and 4 level is a color in the structural information, the synthesis condition may include the condition that is hierarchically the same document, the same page, the same object, and the same color.

According to an embodiment, the server may synthesize two or more sequentially received editing instructions among a plurality of editing instructions based on synthesis information. For example, based on structural information included in editing instructions, editing instructions in which elements of top four layers are identical may be grouped and synthesized.

With reference to (b) of FIG. 6, for example, the server may generate a first synthetic instruction (1-4) by synthesizing the first editing instruction, the second editing instruction, the third editing instruction, and the fourth editing instruction for generating and adding the first object 601, the second object 602, the third object 603, and the fourth object 604, respectively, based on synthesis information. For example, a synthesis checkpoint value (e.g., 1-4) of the first synthetic instruction may represent basic checkpoint values (1, 2, 3 and 4) of editing instructions synthesized in the first synthetic instruction.

With reference to (b) of FIG. 6, among following editing instructions, editing instructions 5, 6, 7, and 8 for representing objects of the same shape (e.g., line) and the same color, respectively, may be synthesized, and editing instructions for generating and adding the fifth object 605, the sixth object 606, the seventh object 607, and the eighth object 608, respectively, may be synthesized and accordingly, a second synthetic instruction may be generated. For example, a synthesis checkpoint value (e.g., 5-8) of the second synthetic instruction may represent basic checkpoint values (5, 6, 7, and 8) of the editing instructions synthesized in the second synthetic instruction.

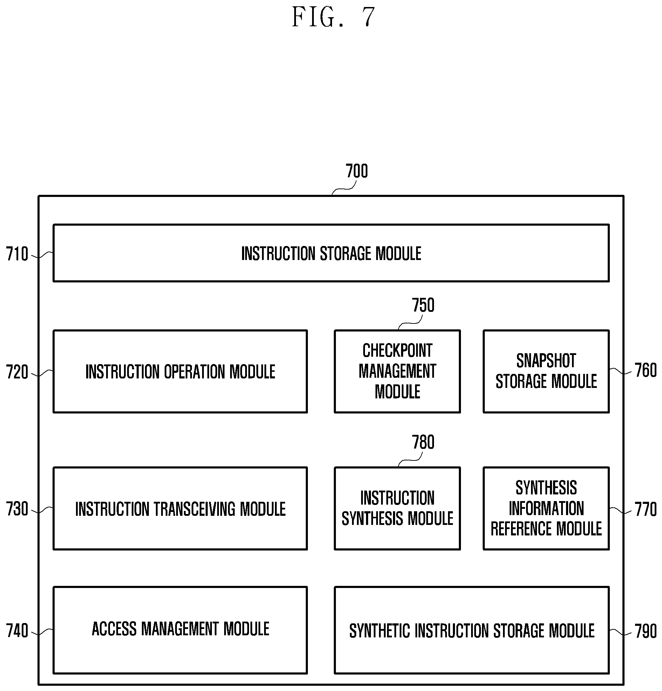

FIG. 7 is a diagram for explaining components for collaborative editing service provision of a server according to various embodiments.

A server 700 (e.g., server 400 of FIG. 4) according to various embodiments may include an instruction storage module 710, an instruction operation module 720, an instruction transceiving module 730, an access management module 740, a checkpoint management module 750, a snapshot storage module 760, an instruction synthesis module 780, a synthesis information reference module 770, and/or a synthetic instruction storage module 790. Illustrated components may operate as, for example, functional modules of the server 700, and, for example, may be implemented in a processor (e.g., processor 420 of FIG. 4) by loading instructions stored in a memory (e.g., memory 410 of FIG. 4). The function of each illustrated module is not limited to this example and a function of a single module may be separated into two or more functions or may be omitted, or may be integrated into another functional module, and functions of two or more modules may be integrated.

The server 700 according to various embodiments may provide a collaborative document editing service to a plurality of electronic devices (e.g., first electronic device 201, second electronic device 202 of FIG. 2 and/or electronic device 300 of FIG. 3).

According to various embodiments, the instruction storage module 710 may sequentially store editing instructions received from the plurality of electronic devices (e.g., first electronic device 201, second electronic device 202 of FIG. 2 and/or electronic device 300 of FIG. 3).

According to various embodiments, the checkpoint management module 750 may separately record and manage individual checkpoint (e.g., basic checkpoint and/or synthesis checkpoint) of the server 700 and the plurality of electronic devices.

According to an embodiment, the server 700 and the plurality of electronic devices may synchronize editing instructions and synthetic instructions stored in the server 700 with editing instructions and synthetic instructions received by the plurality of electronic devices, based on the checkpoint.

According to an embodiment, the instruction storage module 710 may assign and sequentially store basic checkpoint to editing instructions received from the plurality of electronic devices.

According to an embodiment, the editing instruction may include a number indicating a length of a document, text to add, and a number to delete.

According to an embodiment, the instruction storage module 710 may convert editing instructions for a document received from the plurality of electronic devices to the instruction form and may store the same. For example, if a single electronic device among the plurality of electronic devices changes the shape of ' 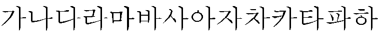 ' to ' 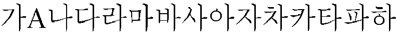 ' in a document displayed on a screen, storage space may be saved by simplifying an operation using instruction 1-"" for data of ' 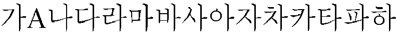 ' and operations with other editing instructions may be easily performed. Therefore, as the content of the document increases, an operation may be more efficient. As instructions stored in the instruction storage module 710 for the original shape are sequentially operated, the instructions may be sequentially stored such that the final changed shape may be derived.

According to an embodiment, checkpoint may be numerically assigned to instructions and may be generated in a sequentially increasing structure if a change occurs. For example, basic checkpoint may be assigned using a sequentially increasing number (e.g., 1, 2, 3, ...).

According to an embodiment, the instruction synthesis module 780 may synthesize two or more editing instructions, and may assign synthesis checkpoint to a synthetic instruction and store the same in the synthetic instruction storage module 790.

According to an embodiment, the synthesis checkpoint may include basic checkpoint information of synthesized editing instructions.

According to an embodiment, the instruction operation module 720 may perform an operation based on checkpoint such that the checkpoint (e.g., basic checkpoint) may be sequentially assigned to editing instructions received by the server 700.

According to an embodiment, in a situation in which editing instructions having the same checkpoint are received from two or more electronic devices, checkpoint of a later received instruction may be operated based on checkpoint of an earlier received instruction based on a time of the server 700.

For example, in a situation in which the same shape, for example, ' 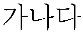 ' is reflected on a current document display screen of the first electronic device and a current display screen of the second electronic device 202 among the plurality of electronic devices, editing instructions for the first electronic device to change ' 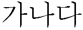 ' to ' 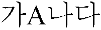 ' and for the second electronic device to change ' 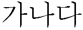 ' to ' 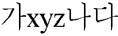 ' and for changing checkpoint 0 to 1 may be transmitted.

In the above example, the server 700 may correct the order of an instruction through the instruction operation module 720 and may correct an instruction operation value. For example, when the server 700 initially receives an instruction from the first electronic device, the server 700 may store1- ""(' 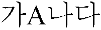 ' shape) of checkpoint 1 of the initially received first electronic device in the instruction storage module 710 and may set the checkpoint to checkpoint 1. Instruction 1-"" (' 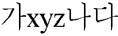 ' shape) of checkpoint 1 of the subsequently received second electronic device collides with checkpoint 1 of the initially received first electronic device and thus, the server 700 may change the checkpoint to checkpoint 2 and then store same through an additional operation.

According to an embodiment, the instruction operation module 720 may identify that an additional instruction is received for "A" value of 1-"A", which is the changed instruction content of checkpoint 1, and may additionally add 1, which is the length of "", to front 1 value of 1-"" and may calculate the same as 2. Next, as characters are added, "xyz" of 1-"" proceeds without a separate operation, and it is identified that a value of last 2 of 1-"" is the same as 2 of checkpoint 1 instruction and the content of checkpoint 2 instruction may be finally calculated as 2-"xyz"-2 without a separate operation.

According to various embodiments, the access management module 740 may manage access and/or connection to the server 700 for each of the plurality of electronic devices. For example, the access management module 740 may generate access and/or connection of a new electronic device based on receiving a request for receiving a collaborative document editing service. For example, the access management module 740 may maintain access and/or connection to a plurality of existing participating electronic terminals that receive the collaborative document editing service, or may release the connection upon a release request.

According to various embodiments, the instruction transceiving module 730 may control editing instruction reception and transmission with the plurality of electronic devices. For example, the instruction transceiving module 730 may receive an editing instruction from a single electronic device among the plurality of electronic devices and may transmit a notification about the corresponding reception and/or received editing instruction to another electronic device among the plurality of electronic devices.

According to an embodiment, the instruction transceiving module 730 may transmit an editing instruction from a single electronic device among the plurality of electronic devices to another electronic device. For example, for the editing instruction of the single electronic device received by the server 700, new checkpoint may be assigned based on the checkpoint of the server 700 and may be stored by performing an operation and may be transmitted to all other electronic devices. Another electronic device that receives an editing instruction corresponding to the new checkpoint may display the changed shape on a user interface (UI) of the document displayed on the screen based on the received editing instruction.

According to various embodiments, the snapshot storage module 760 may finally document and store, as a snapshot, an edited document at a point in time at which access to the server 700 for the collaborative document editing service of the plurality of electronic devices is terminated.

According to various embodiments, the synthesis information reference module 770 may configure a policy to be applied to editing instruction synthesis, and may apply the configured synthesis policy to instruction synthesis.

According to various embodiments, the instruction synthesis module 780 may generate a synthetic instruction by synthesizing instructions stored in the instruction storage module 710 based on synthesis information, and may store the generated synthetic instruction in the synthetic instruction storage module 790.

According to various embodiments, the synthesis information reference module 770 may store and apply a policy for synthesis of editing instructions. For example, by configuring a synthesis cycle and synthesis information as the policy for synthesis, instructions may be synthesized based on the configured synthesis cycle and synthesis information.

According to various embodiments, the synthesis cycle may represent a condition that triggers instructions to be synthesized. For example, the synthesis cycle may be set to the end of a specified period of time and/or a point in time at which the specified number of instructions are received and stored.

According to an embodiment, if the period of time specified according to the synthesis cycle is reached, the synthesis information reference module 770 may start a synthesizing operation for instructions stored in the instruction storage module 710.

According to an embodiment, if the number of instructions specified according to the synthesis cycle are stored in the instruction storage module 710, the synthesis information reference module 770 may start the synthesizing operation for the stored instructions.

According to an embodiment, synthesis information may include the synthesis condition for synthesizing two or more editing instructions based on structural information of instructions. The editing instruction may include an instruction for generating, adding, changing, and/or deleting various elements including various objects, such as text, shape, color, and image, and locations thereof and information in which the elements are structured in a hierarchical structure. For example, in the editing instruction, the structural information may represent which location within the document is being modified in the hierarchical structure for representing the document. For example, the structural information may express an XML document in the hierarchical structure, for example, '<1Page><2Layer><3Object></3Object></2Layer></1Page>' or '1Page -> 2Layer -> 3Object'.

According to an embodiment, the synthesis condition may include a policy representing up to what level (depth) is to be considered to synthesize instructions according to structural information. For example, the synthesis condition may be expressed as various conditions, such as objects including number, character, or symbol. For example, the synthesis condition may be set up to 2 level (2 depth) according to structural information, and, in this case, the synthesis condition may be set as a character string such as '<*Page><*Layer>'.

According to an embodiment, concatenated instructions having the same structural information may be synthesized when synthesis conditions match. For example, based on structural information '<1Page><2Layer><3Object></3Object></2Layer></1Page>' of the instruction, the synthesis condition, for example, up to 2 level may be identified. Based on this, instructions having the same structural condition and matching synthesis condition among a current instruction and subsequent instructions may be synthesized together as instructions to be synthesized.

According to an embodiment, synthesis information may include basic synthesis information that is configured by, for example, the synthesis information reference module 770 of the server 700 and stored as a default value.

According to an embodiment, synthesis information may include synthesis information depending on an editing instruction. For example, the synthesis information dependent on the editing instruction may be included in the editing instruction. For example, the synthesis information dependent on the editing instruction may be configured by an electronic device that transmits the editing instruction and may be transmitted to the server 700.

According to an embodiment, the instruction synthesis module 780 may read instructions from the instruction storage module 710 based on the synthesis cycle, and may start a synthesis task.

According to an embodiment, the instruction synthesis module 780 may identify presence of synthesis information added within the instruction. According to an embodiment, if synthesis information is absent in the instruction, the instruction synthesis module 780 may read basic synthesis information configured by the server 700 from the synthesis information reference module 770.

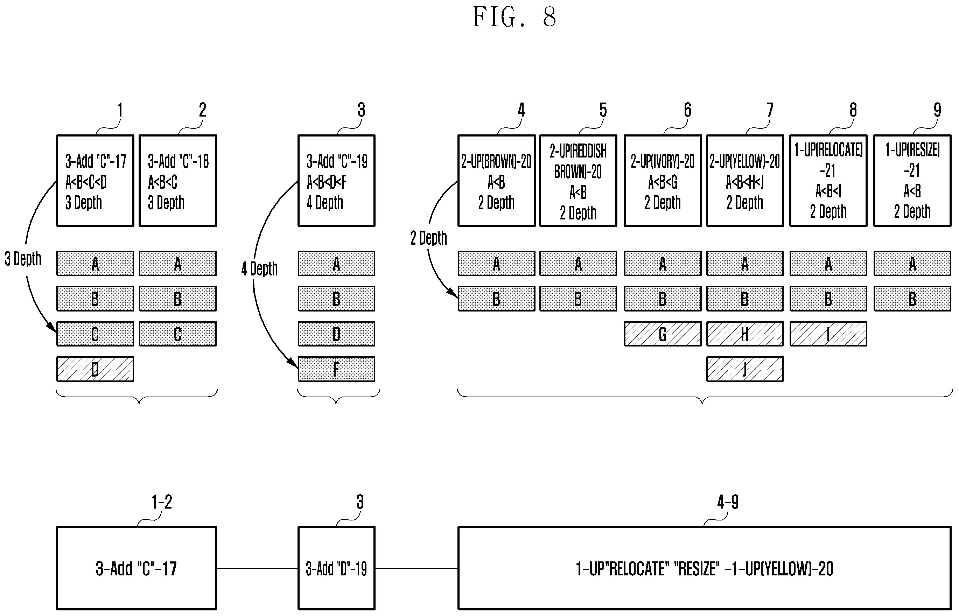

FIG. 8 is a view for explaining an example of a collaborative editing instruction synthesizing operation according to various embodiments.

With reference to FIG. 8, nine instructions may be sequentially stored in an instruction storage module (e.g., instruction storage module 710 of FIG. 7). In the example of FIG. 8, each of the instructions may include instruction content (e.g., 3-Add ""), structural information (e.g., A<B<C<D), and synthesis condition (e.g., 3 depth).

In the drawing, synthesis information of a first instruction (1) may be configured as synthesis condition 3 level (3 depth) based on structural information, and structural information up to level 3 of the first instruction may be identified as A<B<C. The identified synthesis information may be stored in a synthesis information reference module (e.g., synthesis information reference module 770 of FIG. 7) to apply to subsequent instructions.

According to an embodiment, synthesis information of a subsequent second instruction (2) may be identified and may be identified to be configured as 3 level based structural information. The structural information up to 3 level of the second instruction (2) may be identified as A<B<C, which may be seen to match the structural information up to 3 level of the first instruction (1). Based on matching between the synthesis information of the second instruction (2) and the synthesis information of the first instruction, the second instruction (2) may be synthesized with the first instruction (1) and thus, a synthetic instruction (1-2) may be generated.

According to an embodiment, synthesis information of a third instruction (3) may be configured as 4 level of structural information A<B<D<F, which does not match the synthesis information of the preceding instructions and accordingly, the third instruction may be excluded from instructions to be synthesized.

According to an embodiment, synthesis information of a fourth instruction (4) is configured as 2 level of structural information A<B, which does not match the synthesis information (4 level of structural information A<B<D<F) of a previous instruction (third instruction (3)) and accordingly, the fourth instruction (4) may not be synthesized with the third instruction (3).

According to an embodiment, it may be identified that synthesis information of a fifth instruction (5), a sixth instruction (6), a seventh instruction (7), an eighth instruction (8), and a ninth instruction (9) after the fourth instruction (4) all match the synthesis information of the fourth instruction (4), for example, structural information A<B and synthesis condition 2 level. Based on matching of the synthesis information, the fifth instruction (5), the sixth instruction (6), the seventh instruction (7), the eighth instruction (8), and the ninth instruction (9) after the fourth instruction (4) may be synthesized and accordingly, a synthetic instruction (4-9) may be generated.

According to an embodiment, the instruction synthesis module 780 of the server 700 may start a synthesizing operation if a specified period of time or the specified number of instructions are stored based on the synthesis cycle set in the synthesis information reference module 770.

According to an embodiment, the instruction synthesis module 780 may identify synthesis information through additional information within an instruction and, based on this, may determine whether to perform synthesis and may synthesize instructions.

According to an embodiment, the instruction synthesis module 780 may sequentially identify a synthesis condition of synthesis information and structural information on instructions stored in the instruction storage module 710.

According to an embodiment, the instruction synthesis module 780 may store a first instruction according to a synthesis cycle in a buffer, and may perform an operation for synthesis for an instruction that follows the first instruction based on synthesis information of the first instruction. For example, if synthesis information of a second instruction after the first instruction matches synthesis information of the first instruction, the second instruction may be synthesized with the first instruction stored in the buffer. For example, if the synthesis information of the second instruction does not match the synthesis information, a synthetic instruction (if present) synthesized with up to a previous instruction may be stored in the synthetic instruction storage module (e.g., synthetic instruction storage module 790 of FIG. 7), and the current instruction (second instruction) may be stored in the buffer. Then, whether synthesis information of a third instruction and synthesis information of the instruction (, which may be the first instruction or the second instruction,) stored in the buffer match may be identified and, if they match, the third instruction may be stored in a synthetic instruction (if present) synthesized with up to a previous instruction. This process may be repeated up to a last instruction stored in the instruction storage module 710.

According to an embodiment, the instruction synthesis module 780 may identify whether the synthesis information matches as follows.

According to an example, when a synthesis condition of the first instruction for synthesis is 3 depth and structural information is '<1 page><2 layer><3 object><4 axis><5 text>', synthesis information, that is, synthesis condition=3, and structural information '<1 page><2 layer><3 object>' that is up to 3 depth of structural information '<1 page><2 layer><3 object><4 axis><5 text>' may be stored in the buffer.

In the above example, if synthesis information of the second instruction is identified as that the synthesis condition is 3 depth and structural information is '<1 page><2 layer><3 object><4 color>', whether to perform synthesis may be determined by identifying the synthesis condition of structural information, that is, up to 3 depth. That is, that the content up to 3 depth of structural information, <1 page><2 layer><3 object> is identical to synthesis information of the instruction stored in the buffer may be identified, and the content of the instruction stored in the buffer '<1 page><2 layer><3 object><4 axis><5 text>' and the content of the second instruction <1 page><2 layer><3 object><4 color> may be synthesized. Therefore, the edited content (changes) to the unit of object included in 3 depth may be synthesized into one, and the edited content to other objects or the edited content to a page of 1 depth or a layer of 2 depth may not be included in a synthesis target.

In the above example, synthesis information of the subsequent third instruction may be identified as synthesis condition 4 and structural information '<1 page><2 layer><3 object><4 font><5 text>' and synthesis information stored in the buffer may be identified as synthesis condition 3 and structural information '<1 page><2 layer><3 object>'. Through comparison therebetween, they may be identified as mismatch. Therefore, the first instruction and the second instruction may be synthesized and the synthetic instruction stored in the buffer may be stored in the synthetic instruction storage module 790. Also, to compare the third instruction and a subsequent instruction and to determine whether to perform synthesis, synthesis information of the third instruction, synthesis condition 4 and structural information '<1 page><2 layer><3 object><4 font>', may be stored in the buffer.

According to an embodiment, whether to synthesize sequentially stored instructions may be determined through the aforementioned operation, and the sequentially stored instructions may be synthesized or may not be synthesized.

According to an embodiment, a synthesized instructions may be sequentially stored in the synthetic instruction storage module 790.

According to an embodiment, a synthetic instruction stored in the synthetic instruction storage module 790 may be transmitted to a newly accessed new electronic terminal or another electronic device among the plurality of existing participating electronic devices to provide a collaborative document editing service through an instruction transceiving module (e.g., instruction transceiving module 730 of FIG. 7).

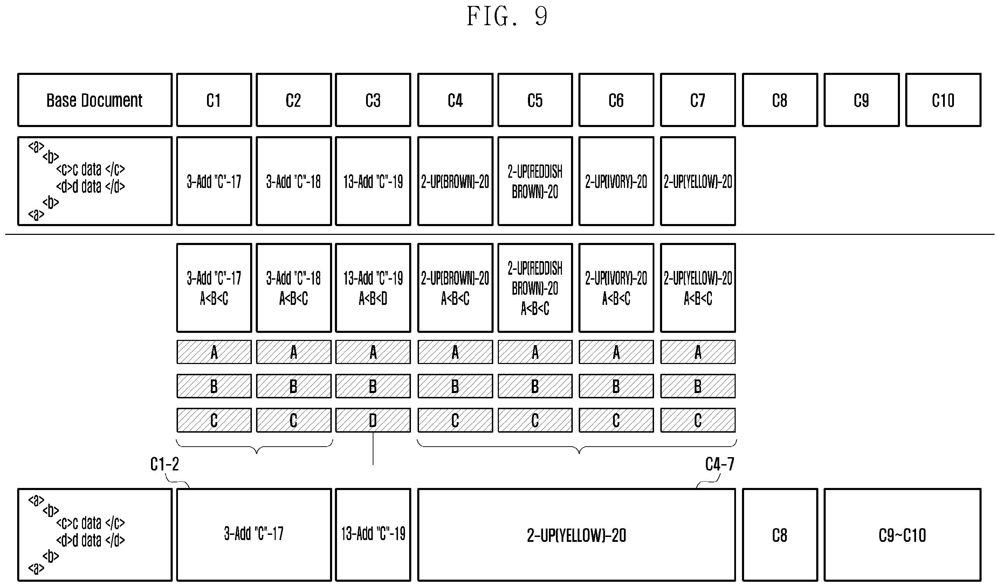

FIG. 9 is a view for explaining an example of a collaborative editing instruction synthesizing operation according to various embodiments.

According to an embodiment, an instruction synthesis module (e.g., instruction synthesis module 780 of FIG. 7) according to an embodiment may determine whether to synthesize instructions based on basic synthesis information configured in a synthesis information reference module (e.g., synthesis information reference module 770 of FIG. 7) based on identifying that synthesis information is absent as additional information within an instruction received from one of a plurality of electronic devices, and may synthesize the instructions.

With reference to FIG. 9, instructions (C1, C2, ...) received from the plurality of electronic devices may not include synthesis information. For example, in an example in which basic synthesis information configured in the synthesis information reference module 770 is structural information 'A<B<C' and synthesis condition 3 level, instructions C1 and C2 include the same structural information and synthesis information as the basic synthesis information and are synthesized, so a synthetic instruction (C1-2) may be generated and stored in a synthetic instruction storage module (e.g., synthetic instruction storage module 790 of FIG. 7).

According to an embodiment, structural information of the instruction C3 is A<B<D and 3 level, which differs from the basic synthesis information of the server 700. Therefore, the instruction C3 may be determined to not be synthesized.

According to an embodiment, structural information of the instruction C4 is A<B<C and the same as the basic synthesis information of the server 700 and then, the instructions C5, C6, and C7 are structural information A<B<C and 3 level, which matches the synthesis information. Therefore, the instructions C4, C5, C6, and C7 are synthesized, and a synthetic instruction C4-7 may be generated and stored in the synthetic instruction storage module 790.

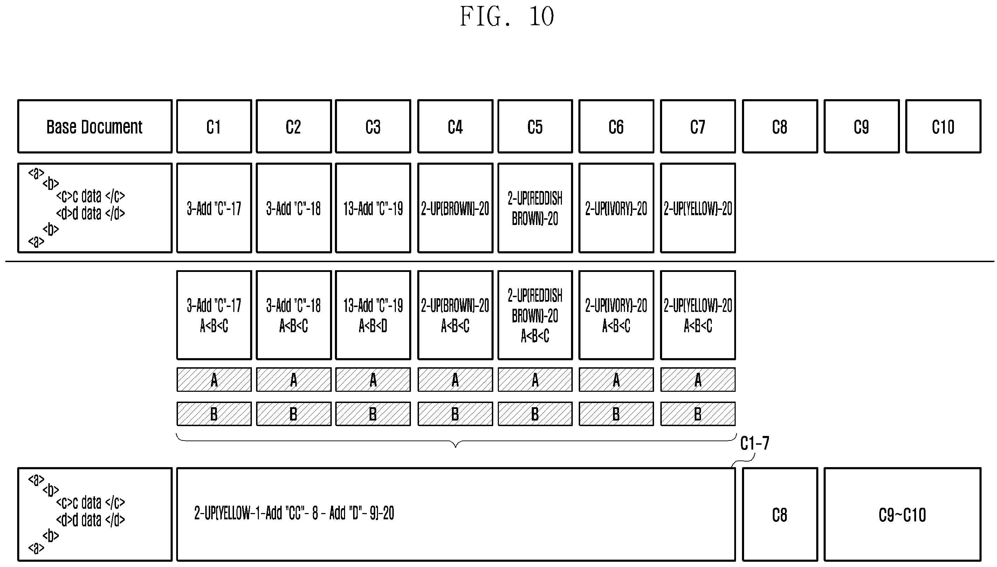

FIG. 10 is a view for explaining an example of a collaborative editing instruction synthesizing operation according to various embodiments.

According to an embodiment, an instruction synthesis module (e.g., instruction synthesis module 780 of FIG. 7) may determine whether to synthesize instructions based on basic synthesis information configured in a synthesis information reference module (e.g., synthesis information reference module 770 of FIG. 7) based on identifying that synthesis information is absent as additional information within an instruction received from one of a plurality of electronic devices, and may synthesize the instructions.

With reference to FIG. 10, instructions (C1, C2, ...) received from the plurality of electronic devices may not include synthesis information. For example, in an example in which basic synthesis information configured in the synthesis information reference module 770 is structural information 'A<B' and synthesis condition 2 level, consecutive instructions C1, C2, C3, C4, C5, C6 and C7 all include the same structural information and synthesis information as the basic synthesis information. Therefore, a synthetic instruction (C1-7) may be generated and stored in a synthetic instruction storage module (e.g., synthetic instruction storage module 790 of FIG. 7).

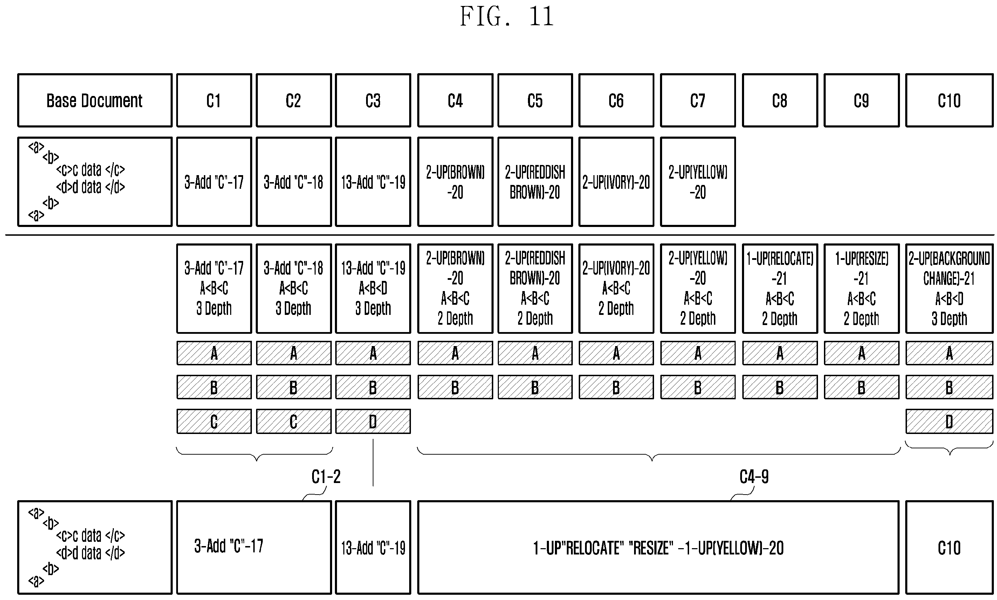

FIG. 11 is a view for explaining an example of a collaborative editing instruction synthesizing operation according to various embodiments.

With reference to FIG. 11, 10 instructions may be sequentially stored in a server (e.g., server 400 of FIG. 4 or server 700 of FIG. 7).

In the example of the drawing, a first instruction (C1) may include structural information (e.g., A<B<C) and a synthesis condition (e.g., 3 depth) in the instruction content (e.g., 3-Add ""), and a second instruction (C2) may include structural information (e.g., A<B<C) and a synthesis condition (3depth) in the instruction content (e.g., 3-Add "").

In the drawing, synthesis information of the first instruction (C1) is configured as synthesis condition 3 level (3 depth) based on structural information, and structural information up to 3 level of the first instruction may be identified as A<B<C. The identified synthesis information may be stored in a synthesis information reference module (e.g., synthesis information reference module 770 of FIG. 7) to be applied to subsequent instructions.

According to an embodiment, synthesis information of the subsequent second instruction (C2) may be identified and may be identified to be configured as 3 level based on structural information. Structural information up to 3 level of the second instruction (C2) may be identified as A<B<C, which shows that it matches the structural information up to 3 level of the first instruction (C1). The second instruction (C2) may be synthesized with the first instruction (C1) based on that synthesis information of the second instruction (C2) and synthesis information of the first instruction, and accordingly, a synthetic instruction (C1-2) may be generated.

According to an embodiment, synthesis information of a third instruction (C3) is configured as 3 level of structural information A<B<D, which does not match synthesis information of the preceding instructions, so the third instruction may be excluded from instructions to be synthesized.

According to an embodiment, synthesis information of a fourth instruction (C4) is configured as 2 level of structural information A<B, which does not match synthesis information (3 level of structural information A<B<D) of a previous instruction (third instruction (C3)), so the fourth instruction (C4) may not be synthesized with the third instruction (C3).

According to an embodiment, synthesis information of a fifth instruction (C5), a sixth instruction (C6), a seventh instruction (C7), an eighth instruction (C8), and a ninth instruction (C9) after the fourth instruction (C4) may be identified as all matching the synthesis information of the fourth instruction (C4), for example, structural information A<B and synthesis condition 2 level. Based on matching of the synthesis information, the fifth instruction (C5), the sixth instruction (C6), the seventh instruction (C7), the eighth instruction (C8), and the ninth instruction (C9) after the fourth instruction (C4) may all be synthesized and accordingly, a synthetic instruction (C4-9) may be generated.

According to an embodiment, synthesis information of a tenth instruction (C10) is configured as 3 level of structural information A<B<D, which does not match synthesis information (2 level of structural information A<B) of a previous instruction (fourth instruction (C4)), so the tenth instruction (C10) may not be synthesized with a previous synthetic instruction (C4-9).

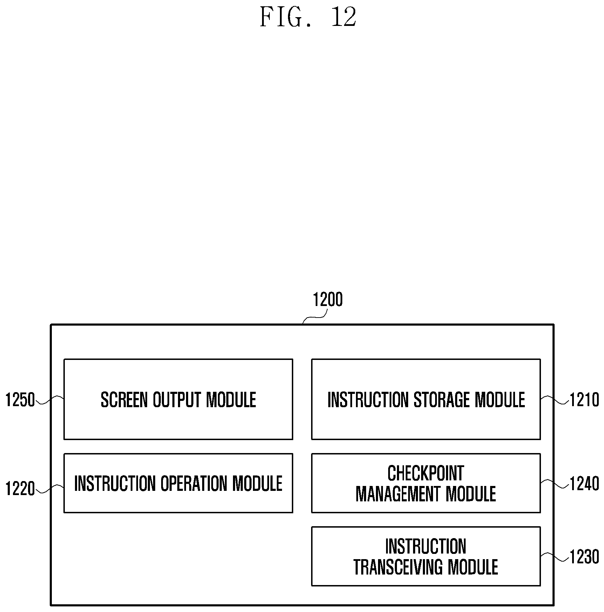

FIG. 12 is a diagram for explaining components for collaborative editing service provision of a plurality of electronic devices according to various embodiments.

With reference to FIG. 12, an electronic device 1200 (e.g., first electronic device 201, or second electronic device 202 of FIG. 2, or electronic device 300 of FIG. 3) is an example of a single electronic device among the plurality of electronic devices that provides a collaborative editing service.

According to various embodiments, the electronic device 1200 may include an instruction storage module 1210, an instruction operation module 1220, an instruction transceiving module 1230, a checkpoint management module 1240, and a screen output module 1250. Illustrated components may operate as, for example, functional modules of the electronic device 1200, and, for example, may be implemented in a processor (e.g., processor 320 of FIG. 3) by loading instructions stored in a memory (e.g., memory 310 of FIG. 3). The function of each illustrated module is not limited to this example and a function of a single module may be separated into two or more functions or may be omitted, or may be integrated into another functional module, and functions of two or more modules may be integrated.

The electronic device 1200 according to various embodiments may provide a collaborative document editing service in real time with other electronic devices (e.g., first electronic device 201, second electronic device 202 of FIG. 2 and/or electronic device 300 of FIG. 3) among the plurality of electronic devices.

According to various embodiments, the instruction storage module 1210 may sequentially store editing instructions generated by the plurality of electronic devices.

According to various embodiments, the checkpoint management module 1240 may record and manage each of checkpoint (e.g., basic checkpoint and/or synthesis checkpoint) of a server (e.g., server 700 of FIG. 7 and checkpoint (e.g., basic checkpoint and/or synthesis checkpoint) of the electronic device 1200.

According to an embodiment, the checkpoint management module 1240 may synthesize an editing instruction and a synthetic instruction stored in the server 700 and an editing instruction and a synthetic instruction stored in the instruction storage module 1210 based on the checkpoint.

According to an embodiment, the instruction transceiving module 1230 may identify whether an instruction to be received is present in the server 700 based on the checkpoint of the server 700 and the electronic device 1200, and may receive the instruction from the server 700.

According to an embodiment, the instruction transceiving module 1230 may transmit, to the server 700, an editing instruction generated as editing is performed on a document in the electronic device 1200, based on the checkpoint of the server 700 and the electronic device 1200.

According to an embodiment, the instruction storage module 1210 may sequentially store instructions based on basic checkpoint or synthesis checkpoint assigned to the instructions received from the server 700.

According to an embodiment, the instruction operation module 1220 may generate an editing instruction by sequentially assigning the checkpoint in response to a document editing task input to the electronic device 1200 according to a collaborative document creation task, or may perform operation processing editing on instructions received from the server 700 based on the checkpoint to store the same in the instruction storage module 1210 or to output a screen through the screen output module 1250.

According to an embodiment, the screen output module 1250 may configure or change a screen of a specific document based on instructions stored in the instruction storage module 1210 according to a collaborative document creation task and may display the same on a display (e.g., 340 of FIG. 3).

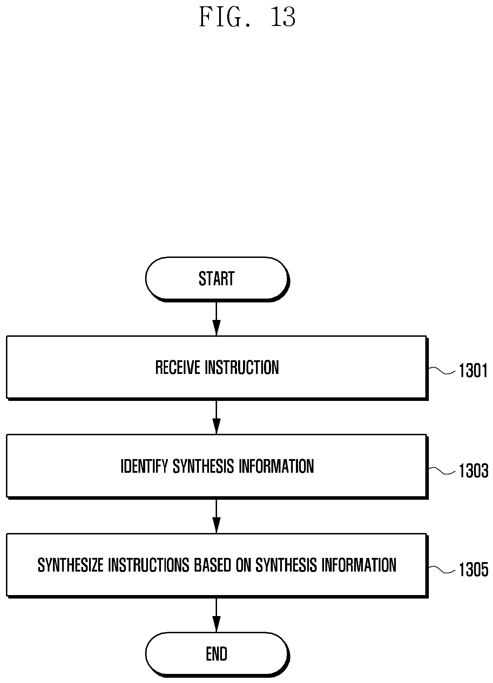

FIG. 13 is a signal flowchart for explaining an example of a collaborative editing instruction processing operation of a server according to various embodiments.

In the following embodiment, each of operations may be sequentially performed, but is not necessarily sequentially performed. For example, the order of each of the operations may be changed and at least two operations may be performed in parallel.

According to an embodiment, operations 1301 to 1305 may be understood to be performed by a processor (e.g., processor 420 of FIG. 4) of a server (e.g., server 400 of FIG. 4 or server 700 of FIG. 7).

With reference to FIG. 13, a server (e.g., server 400 of FIG. 4 or server 700 of FIG. 7) may provide a collaborative document editing service to a plurality of electronic devices (e.g., first electronic device 201, second electronic device 202 of FIG. 2, electronic device 300 of FIG. 3, or electronic device 1200 of FIG. 12).

According to various embodiments, in operation 1301, the server may receive an editing instruction according to a collaborative document creation task through a wired or wireless communication channel with the plurality of electronic devices.

According to an embodiment, editing instructions received from the plurality of electronic devices may be sequentially stored in a memory (e.g., memory 410 of FIG. 4 or instruction storage module 710 of FIG. 7).

According to various embodiments, in operation 1303, the server may identity synthesis information on instruction synthesis.

According to an embodiment, the editing instruction may include synthesis information as, for example, additional information. For example, synthesis information may include synthesis information configured by each electronic device.

According to an embodiment, the synthesis information may include basic synthesis information configured by the server. For example, when an editing instruction does not include the synthesis information, basic synthesis information set to the server may be identified as synthesis information on instruction synthesis

According to an example, the synthesis information may include structural information and a synthesis condition. For example, the synthesis information may include the synthesis condition for synthesizing two or more editing instructions based on structural information of the editing instructions. For example, the synthesis information may include the synthesis condition in which elements of two or more higher layers are identical, based on hierarchical structure information of elements included in the editing instruction.

According to various embodiments, in operation 1305, the server may determine whether to synthesize the instruction based on the identified synthesis information and may synthesize the instruction with a previous instruction based on synthesis determination. For example, the server may synthesize two or more consecutive instructions of which synthesis information matches among sequentially stored editing instructions. For example, the server may synthesize a current editing instruction with a previous editing instruction based on that synthesis information identified for the current editing instruction matches synthesis information identified for the previous editing instruction.

According to various embodiments, the server may store, in the memory, a synthetic instruction generated by synthesizing the instruction with the previous instruction, and may transmit the same to one or more electronic devices among the plurality of electronic devices.

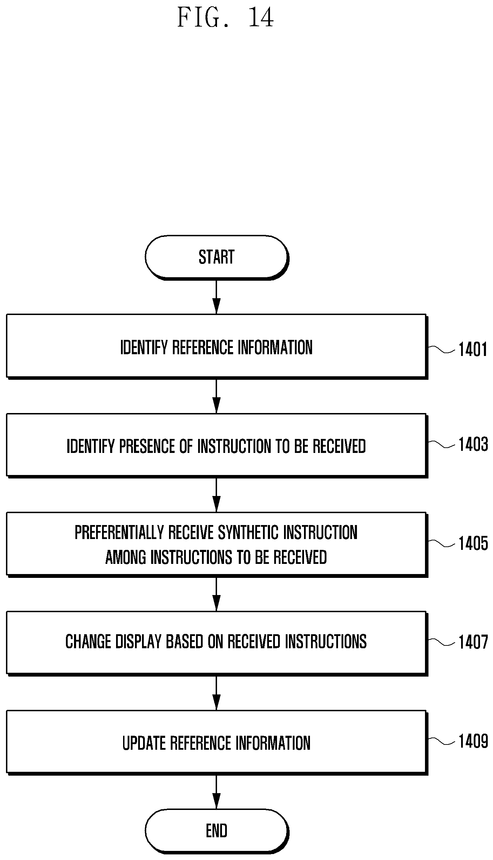

FIG. 14 is a signal flowchart for explaining an example of a collaborative editing instruction processing operation of an electronic device according to various embodiments.

In the following embodiment, each of operations may be sequentially performed, but is not necessarily sequentially performed. For example, the order of each of the operations may be changed and at least two operations may be performed in parallel.

According to an embodiment, operations 1401 to 1409 may be understood to be performed by a processor (e.g., processor 320 of FIG. 3) of an electronic device (e.g., electronic device 300 of FIG. 3 or electronic device 1200 of FIG. 12).

According to various embodiments, an electronic device (e.g., electronic device 300 of FIG. 3 or electronic device 1200 of FIG. 12) may be connected through a wired or wireless communication channel with a server (e.g., server 400 of FIG. 4 or server 700 of FIG. 7) to provide a collaborative document task with a plurality of electronic devices.

According to various embodiments, the electronic device may execute an application for performing a collaborative document creation task, may display a screen of a specific document on a display (e.g., display 340 of FIG. 3), may generate and transmit, to the server, an editing instruction for the specific document, or may receive an editing instruction for the specific document from the server, and based on this, may change the screen of the specific document displayed on the display.

According to various embodiments, in operation 1401, the electronic device may identify reference information (e.g., checkpoint) for an instruction for document creation or edition.

According to various embodiments, in operation 1403, the electronic device may identify whether an instruction to be received is present in the server based on the identified checkpoint. For example, a checkpoint value may include a basic checkpoint value that is sequentially added to stored editing instructions and a synthesis checkpoint value that is sequentially added to stored synthetic instructions. For example, before instructions stored in the server and the electronic device are synchronized, the checkpoint value of the server and the checkpoint value of the electronic device may differ from each other. For example, the electronic device may identify the checkpoint value of the electronic device and the checkpoint value of the server and, based on this, may identify whether the instruction to be received is present in the server.

According to various embodiments, in operation 1405, the electronic device may preferentially receive a synthetic instruction among the instructions to be received and then may receive a subsequent instruction based on presence of the instruction to be received. For example, the electronic device may identify the synthesis checkpoint value of the electronic device and the synthesis checkpoint value of the server and, based on this, may identify whether a synthetic instruction to be received is present in the server.

According to various embodiments, in operation 1407, the electronic device may change the screen of the specific document displayed on the display, based on the received instructions.

According to various embodiments, in operation 1409, the electronic device may update the checkpoint of the server and reference information (e.g., checkpoint) of the electronic device.

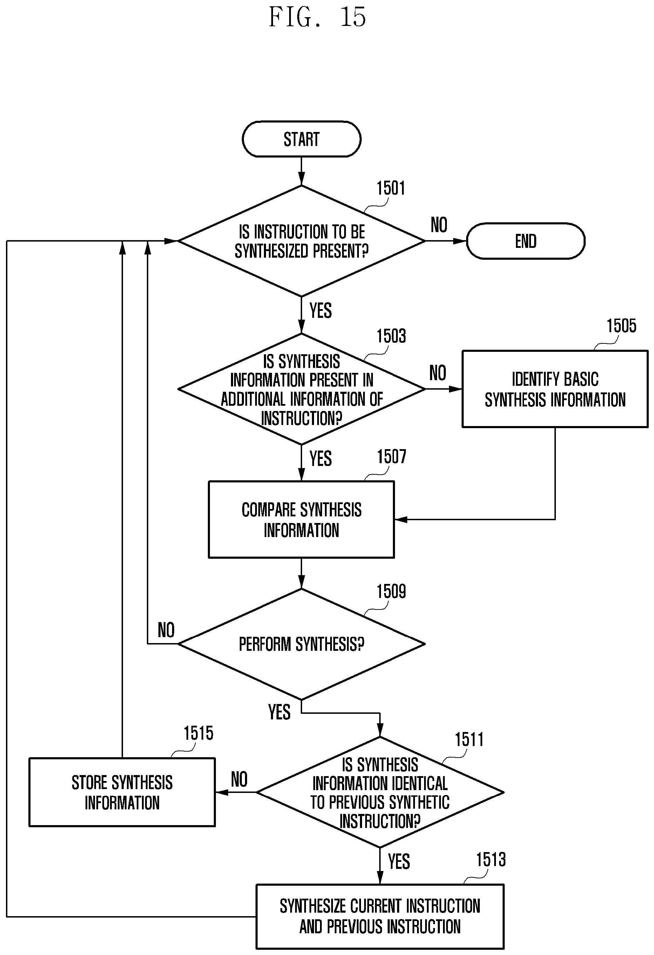

FIG. 15 is a signal flowchart for explaining an example of a collaborative editing instruction processing operation of a server according to various embodiments.

In the following embodiment, each of operations may be sequentially performed, but is not necessarily sequentially performed. For example, the order of each of the operations may be changed and at least two operations may be performed in parallel.

According to an embodiment, operations 1501 to 1515 may be understood to be performed by a processor (e.g., processor 420 of FIG. 4) of a server (e.g., server 400 of FIG. 4 or server 700 of FIG. 7).

According to various embodiments, a server (e.g., server 400 of FIG. 4 or server 700 of FIG. 7) may provide a collaborative document editing service to a plurality of electronic devices (e.g., first electronic device 201, second electronic device 202 of FIG. 2, electronic device 300 of FIG. 3, or electronic device 1200 of FIG. 12).

According to various embodiments, the server may receive instructions for editing a specific document through a wired or wireless communication channel with the plurality of electronic devices and may sequentially store the same in a memory (e.g., memory 410 of FIG. 4) based on checkpoint.

According to various embodiments, in operation 1501, the server may identify whether an instruction to be synthesized is present. Operation 1501 may be performed based on a synthesis cycle, for example, at the end of a specified period of time and/or a point in time at which the specified number of instructions are received and stored. For example, a synthesizing operation may be started on instructions stored in the server for the period of time specified according to the synthesis cycle. For example, if the number of instructions specified according to the synthesis cycle are stored, the synthesizing operation may be sequentially started on the stored instructions. If an instruction to be synthesized is absent (operation 1501-NO), the process may be terminated. If the instruction to be synthesized is present (operation 1501-YES), operation 1503 may be performed.

According to various embodiments, in operation 1503, the server may identify whether synthesis information is present in additional information of a current instruction to be synthesized. For example, synthesis information may be dependent on each instruction and included as additional information. For example, synthesis information dependent on the instruction may be included in a corresponding editing instruction. For example, synthesis information dependent on the editing instruction may be configured by an electronic device that transmits the editing instruction and transmitted to the server.

According to various embodiments, if synthesis information is absent in the current instruction to be synthesized (operation 1503 - NO), the server may proceed with operation 1505 to identify basic synthesis information, and if the synthesis information is present (operation 1503-YES), may proceed with operation 1507 to compare the identified synthesis information with stored synthesis information. For example, the server may configure basic synthesis information for determining instruction synthesis. For example, when synthesis information is not included in the instruction, the server may proceed with operation 1505 to identify basic synthesis information configured by the server as the synthesis information, and may proceed with operation 1507 to determine whether to perform instruction synthesis using the identified synthesis information. For example, the server may compare the identified synthesis information with the stored synthesis information. For example, when a previous instruction of the current instruction is not synthesized, the stored synthesis information may include synthesis information on the previous instruction. For example, when the previous instruction of the current instruction is synthesized, the stored synthesis information may include synthesis information (, which may be the same as synthesis information of previous instruction,) of a first instruction among instructions synthesized with the previous instruction).

According to various embodiments, in operation 1509, the server may compare synthesis information on the current instruction and synthesis information, for example, a synthesis condition, on the previous instruction, and may determine whether to perform synthesis. For example, when the synthesis information is included in the current instruction and the synthesis information is also included in the previous instruction, the server may compare two pieces of synthesis information and may determine whether to perform synthesis. For example, when the synthesis information is not included in instructions, whether to perform synthesis may be determined by comparing synthesis information between two instructions based on basic synthesis information configured by the server. If synthesis conditions are not the same (1509-NO), the current instruction may not be synthesized and operation 1501 may be performed.

According to various embodiments, if synthesis conditions of two instructions are the same (1509-YES), the server may identify whether two pieces of synthesis information are the same by comparing synthesis information, for example, structural information, of the current instruction and synthesis information, for example, structural information, of the previous synthetic instruction based on synthesis conditions in operation 1511

According to various embodiments, if the synthesis information of the current instruction is the same as synthesis information of the previous synthetic instruction (operation 1511-YES), the server may synthesize the current instruction with the previous instruction in operation 1513.

According to various embodiments, if the synthesis information of the current instruction is not the same as the synthesis information of the previous synthetic instruction (operation 1511- NO), the server may store synthesis information of a current synthetic instruction in operation 1515 and may proceed with operation 1501.

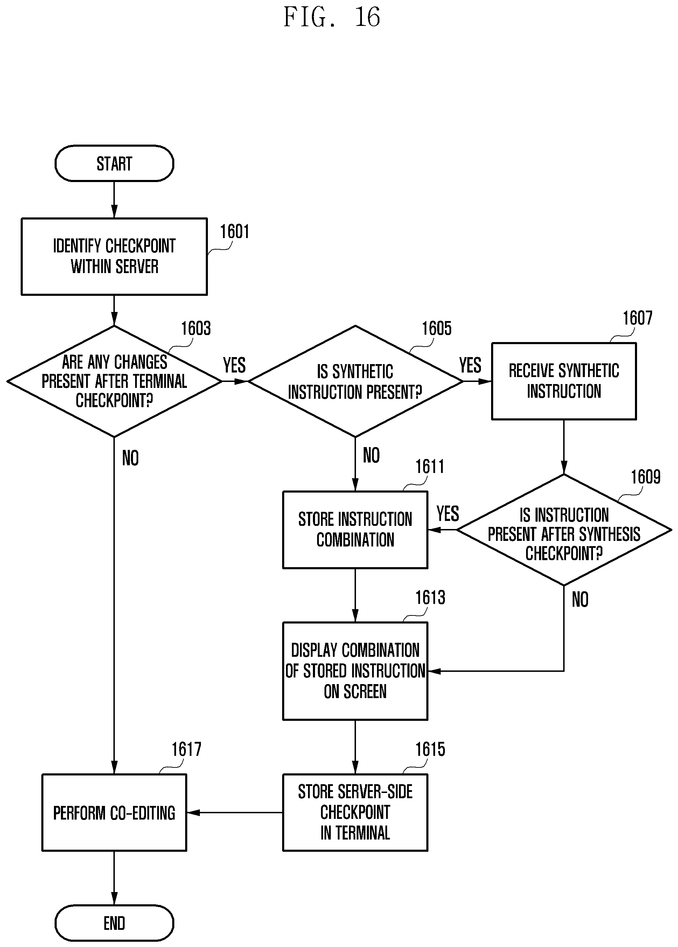

FIG. 16 is a signal flowchart for explaining an example of a collaborative editing instruction processing operation of an electronic device according to various embodiments.

In the following embodiment, each of operations may be sequentially performed, but is not necessarily sequentially performed. For example, the order of each of the operations may be changed and at least two operations may be performed in parallel.

According to an embodiment, operations 1601 to 1617 may be understood to be performed by a processor (e.g., processor 320 of FIG. 3) of an electronic device (e.g., electronic device 300 of FIG. 3 or electronic device 1200 of FIG. 12).

According to various embodiments, the electronic device (e.g., electronic device 300 of FIG. 3 or electronic device 1200 of FIG. 12) may be connected through a wired or wireless communication channel with a server (e.g., server 400 of FIG. 4 or server 700 of FIG. 7) to perform a collaborative document task with a plurality of electronic devices.

According to various embodiments, the electronic device may start a collaborative document creation task, and may identify checkpoint within the server through communication with the server in operation 1601. For example, a checkpoint value within the server may include checkpoint of the server and checkpoint of the electronic device.

According to various embodiments, in operation 1603, the electronic device may compare the checkpoint within the server and the checkpoint stored by the electronic device, and may identify whether any changes are present.

According to various embodiments, if the changes are present according to checkpoint identification (operation 1603 - YES), the electronic device may identify whether a synthetic instruction to be received is present in the server in operation 1605.

According to various embodiments, if the synthetic instruction to be received is present within the server (operation 1605 - YES), the electronic device may receive the synthetic instruction in operation 1607.

According to various embodiments, in operation 1609, the electronic device may identify whether an instruction to be received after synthesis checkpoint is present after receiving the synthetic instruction.

According to various embodiments, if the synthetic instruction is absent (operation 1605 - NO) or if the instruction to be received after synthesis checkpoint is present after receiving the synthetic instruction (operation 1609 - YES), the electronic device may receive and store the instruction in operation 1611.

According to various embodiments, if instruction reception and storage is completed or if an instruction after synthesis checkpoint is absent (operation 1609 - NO), the electronic device may display, on the display, the screen changed based on a combination of stored instructions in operation 1613.

According to various embodiments, in operation 1615, the electronic device may store server-side checkpoint in the electronic device.

According to various embodiments, if there is no change according to checkpoint identification (1603 - NO) or after storing the server-side checkpoint, the electronic device may perform a collaborative editing task for the document in operation 1617.

According to various embodiments, an electronic device (e.g., server 400 or 700 of FIG. 4 or FIG. 7) may include a memory (e.g., memory 410 of FIG. 4), a communication circuit (e.g., communication circuit 430 of FIG. 4), and at least one processor (e.g., processor 420 of FIG. 4) in conjunction with the memory and the communication circuit, and the processor may be configured to receive an instruction for document creation generated based on an instruction having a hierarchical structure from an external electronic device through the communication circuit, to identify synthesis information on the instruction, and to determine whether to synthesize the instruction with a previous instruction based on the synthesis information, and to synthesize the instruction with the previous instruction based on synthesis determination.

According to various embodiments, the synthesis information on the instruction may be included in the instruction as additional information.

According to various embodiments, the processor may be configured to identify whether the synthesis information is included in the instruction, and to identify synthesis information stored in the electronic device based on that the synthesis information is not included in the instruction.

According to various embodiments, the synthesis information may be configured based on the hierarchical structure.

According to various embodiments, the processor may be configured to compare synthesis information on the instruction and synthesis information on the previous instruction, and to determine whether to synthesize the instruction with the previous instruction based on their matching.

According to various embodiments, the processor may be configured to sequentially store the instructions by setting checkpoint according to a reception point in time and, and to determine whether to synthesize the instruction based on synthesis information on each of the sequentially stored instructions, based on a synthesis period.

According to various embodiments, the processor may be configured to sequentially set and store synthesis checkpoint for a synthetic instruction generated by synthesizing the instruction with the previous instruction.

According to various embodiments, the processor may be configured to identify checkpoint or synthesis checkpoint of the external electronic device based on the instruction or the synthetic instruction transmitted to the external electronic device.

According to various embodiments, the processor may be configured to compare the checkpoint or the synthesis checkpoint stored in the memory and the checkpoint or the synthesis checkpoint of the external electronic device, and to control transmission of the instruction or the synthetic instruction to the external electronic device.

According to various embodiments, an electronic device (e.g., electronic device 300 or 1200 of FIG. 3 or FIG. 12) may include a display (e.g., display 340 of FIG. 3), a communication circuit (e.g., communication circuit 330 of FIG. 3), and at least one processor (e.g., processor 320 of FIG. 3) operatively connected to the display and the communication circuit, and the processor may be configured to display, on the display, a document created based on an instruction having a hierarchical structure, to identify whether an instruction to be received is present based on communication with an external electronic device through the communication circuit, to preferentially receive a synthetic instruction among the instructions to be received, and to change the document displayed on the display based on the received instructions.

According to various embodiments, the processor may be configured to receive checkpoint sequentially assigned to the instruction to be received from the external electronic device and to identify whether the instruction to be received is present based on the checkpoint.

According to various embodiments, the processor may be configured to compare the checkpoint received from the external electronic device and checkpoint stored in the memory and to identify whether the instruction to be received is present.

According to various embodiments, the processor may be configured to identify whether an instruction to be received after the synthetic instruction is present, based on receiving the synthetic instruction, and to receive the instruction to be received after the synthetic instruction.

According to various embodiments, the processor may be configured to receive synthesis checkpoint sequentially set for the synthetic instruction from the external electronic device, to compare the checkpoint received from the external electronic device and synthesis checkpoint stored in the memory, and to identify whether the synthetic instruction is present among the instructions to be received.

According to various embodiments, a method of an electronic device (e.g., server 400 or 700 of FIG. 4 or FIG. 7) may include receiving an instruction for document creation generated based on an instruction having a hierarchical structure from an external electronic device through the communication circuit, identifying synthesis information on the instruction, and determining whether to synthesize the instruction with a previous instruction based on the synthesis information, and synthesizing the instruction with the previous instruction based on synthesis determination.

According to various embodiments, the method may further include identifying whether the synthesis information included as additional information is present in the instruction as synthesis information on the instruction and identifying synthesis information stored in the electronic device based on that the synthesis information is not included in the instruction.

According to various embodiments, the synthesis information may be configured based on the hierarchical structure, and the synthesizing operation may determine to synthesize the instruction with the previous instruction based on that synthesis information on the instruction matches synthesis information on the previous instruction.

According to various embodiments, a method of an electronic device (e.g., electronic device 300 or 1200 of FIG. 3 or 12) may include displaying, on the display, a document generated based on an instruction having a hierarchical structure, identifying whether an instruction to be received is present based on communication with an external electronic device. According to various embodiments, the method may include preferentially receiving a synthetic instruction among the instructions to be received and changing the document displayed on the display based on the received instructions.

According to various embodiments, the method may further include receiving checkpoint sequentially assigned to the instruction to be received from the external electronic device, and the identifying may include identifying whether the instruction to be received is present based on the checkpoint.

According to various embodiments, the method may further include identifying whether an instruction to be received after the synthetic instruction is present and receiving the instruction to be received after the synthetic instruction.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The embodiments disclosed in this document are only examples presented to easily explain their technical contents and help their understanding, and are not intended to limit the scope of the disclosed embodiments. Therefore, the scope of the disclosed various embodiments should be interpreted as including, in addition to the disclosed embodiments, all changed or modified forms derived based on the technical ideas of the disclosed various embodiments.

## Claims

1. An electronic device comprising:
a memory;
a communication circuit; and
at least one processor in conjunction with the memory and the communication circuit;
wherein the processor is configured to:
receive an instruction for document creation generated based on an instruction having a hierarchical structure from an external electronic device through the communication circuit,
identify synthesis information on the instruction, and
determine whether to synthesize the instruction with a previous instruction based on the synthesis information, and synthesize the instruction with the previous instruction based on synthesis determination.

2. The electronic device of claim 1, wherein the synthesis information on the instruction is included in the instruction as additional information.

3. The electronic device of claim 1, wherein the processor is configured to, identify whether the synthesis information is included in the instruction, and identify synthesis information stored in the electronic device based on that the synthesis information is not included in the instruction.

4. The electronic device of claim 1, wherein the synthesis information is configured based on the hierarchical structure.

5. The electronic device of claim 4, wherein the processor is configured to compare synthesis information on the instruction and synthesis information on the previous instruction, and to determine whether to synthesize the instruction with the previous instruction based on their matching.

6. The electronic device of claim 1, wherein the processor is configured to, sequentially store the instructions by setting checkpoint according to a reception point in time, and
determine whether to synthesize the instruction based on synthesis information on each of the sequentially stored instructions, based on a synthesis period.

7. The electronic device of claim 6, wherein the processor is configured to sequentially set and store synthesis checkpoint for a synthetic instruction generated by synthesizing the instruction with the previous instruction.

8. The electronic device of claim 7, wherein the processor is configured to identify checkpoint or synthesis checkpoint of the external electronic device based on the instruction or the synthetic instruction transmitted to the external electronic device.

9. The electronic device of claim 8, wherein the processor is configured to compare the checkpoint or the synthesis checkpoint stored in the memory and the checkpoint or the synthesis checkpoint of the external electronic device, and to control transmission of the instruction or the synthetic instruction to the external electronic device.

10. An electronic device comprising:
a display;
a communication circuit; and
at least one processor operatively connected to the display and the communication circuit,
wherein the processor is configured to:
display, on the display, a document created based on an instruction having a hierarchical structure,
identify whether an instruction to be received is present based on communication with an external electronic device through the communication circuit,
preferentially receive a synthetic instruction among the instructions to be received, and
change the document displayed on the display based on the received instructions.

11. The electronic device of claim 10, wherein the processor is configured to receive checkpoint sequentially assigned to the instruction to be received from the external electronic device and to identify whether the instruction to be received is present based on the checkpoint.

12. The electronic device of claim 11, wherein the processor is configured to compare the checkpoint received from the external electronic device and checkpoint stored in the memory and to identify whether the instruction to be received is present.

13. The electronic device of claim 10, wherein the processor is configured to,
identify whether an instruction to be received after the synthetic instruction is present, based on receiving the synthetic instruction, and
receive the instruction to be received after the synthetic instruction.

14. The electronic device of claim 13, wherein the processor is configured to, receive synthesis checkpoint sequentially set for the synthetic instruction from the external electronic device,
compare the checkpoint received from the external electronic device and synthesis checkpoint stored in the memory, and
identify whether the synthetic instruction is present among the instructions to be received.

15. A method performed by the electronic device according to any one of claims 1 to 14.
